# EUROPÄISCHE PATENTSCHRIFT

(11) **EP 2 092 499 B1**
(45) Veröffentlichungstag und Bekanntmachung des Hinweises auf die Patenterteilung: **22.05.2019**
(21) Anmeldenummer: 07856694.0
(22) Anmeldetag: 13.12.2007
(51) Int. Cl.: G08B 29/18, G08B 31/00, G05B 23/00, G08B 29/26

(54) **VERFAHREN UND EINRICHTUNG ZUR OPTIMIERUNG EINER ALARMKONFIGURATION**
PROCEDURES AND DEVICE FOR OPTIMIZING AN ALARM CONFIGURATION
PROCÉDÉS ET DISPOSITIF POUR OPTIMISER UNE CONFIGURATION D'ALARME

(30) Priorität: 21.12.2006 DE 102006061960; 27.02.2007 DE 102007009341
(43) Veröffentlichungstag der Anmeldung: 26.08.2009
(73) Patentinhaber: ABB Schweiz AG, 5400 Baden (CH)
(72) Erfinder: HOLLENDER, Martin, 69120 Heidelberg (DE)
(74) Vertreter: Miller, Toivo
(86) Internationale Anmeldenummer: PCT/EP2007/010948
(87) Internationale Veröffentlichungsnummer: WO 2008/077497

(56) Entgegenhaltungen:
- EP-A- 0 856 826
- WO-A-94/19912
- JP-A- 5 189 679

## Beschreibung

Die Erfindung bezieht sich auf Verfahren und eine Einrichtung zur Optimierung von Alarmkonfigurationsparametern für Alarmsysteme. Die Erfindung ist durch die beigefügten Ansprüche definiert.

Alarmsysteme sind wesentliche Einrichtungen von Überwachungssystemen oder Leitsystemen einer technischen Anlage, wie z. B. Kraftwerksanlagen oder Produktionsanlagen, und sie sind wichtiges Hilfsmittel für das Betriebspersonal, um Anlagen- oder Prozesszustände, die einen unmittelbaren Eingriff erfordern, zu erkennen. Die Arbeitsweise der Alarmsysteme zur Ermittlung und Anzeige von Anlagen- oder Prozesszuständen wird durch Alarmparameter bestimmt, also z. B. durch festgelegte Grenzwerte von Prozessvariablen.

Analysen, die nach dem Eintritt schwerwiegender Betriebsstörungen durchgeführt wurden, haben die Bedeutung der Qualität von Alarmsystemen, bzw. optimaler Alarmparameter gezeigt. Dabei hat sich herausgestellt, dass sowohl eine späte Meldung von sich schon länger zuvor anbahnenden Störungen, als auch eine zu große Anzahl von Alarmmeldungen problematisch sein kann. Eine einzige Prozessstörung, wie beispielsweise ein verstopftes Ventil, kann zu vielen unterschiedlichen Folgealarmen führen, wie z. B. "Durchfluss zu niedrig" oder "Füllstand zu niedrig". Es ist nicht ungewöhnlich, dass ein und dieselbe Prozessstörung zu Hunderten von Alarmen führt. Den Anlagenfahrern sollten aber nur solche Alarme gemeldet werden, auf die sie durch Handlungen reagieren können. Zudem sollte auch in kritischen Situationen die Gesamtzahl der gemeldeten Alarme begrenzt bleiben, weil eine hohe Anzahl von Meldungen nicht nur lästig, sondern auch gefährlich ist, da einerseits die Aufmerksamkeit des Personals nachlässt und andererseits möglicherweise wichtige Meldungen übersehen werden.

Die Erkenntnisse aus solchen Analysen haben sowohl zu Richtlinien und Empfehlungen für Alarmsysteme geführt, als auch zu vielfältigen Bemühungen der Fachwelt, um eine Unterdrückung unerwünschter Meldungen und eine Optimierung von Alarmparametern zu erreichen. So nennt z. B. EEMUA 191 (The Electrical Equipment Manufacturers and Users Association guide, publication No. 191, 1999, ISBN 0 85931 076 0), auch für kritische Situationen eine Begrenzung der gemeldeten Alarme auf eine Gesamtzahl von 10 Alarmen innerhalb von 10 Minuten als zweckmäßig, um zu vermeiden, dass Anlagenfahrer von der Vielzahl der Alarme überfordert werden. Um solche Ziele zu erreichen, analysiert man kausale Beziehungen zwischen Alarmen und unterscheidet zwischen ursächlichen Alarmen (root cause) und Folgealarmen. Ein als Folgealarm erkannter Alarm kann durch geeignete Mechanismen im Leitsystem unterdrückt werden. In US 5 581 242 wird z. B. vorgeschlagen mit Tabellen zu arbeiten, in denen Bedingungen zur Unterdrückung der Anzeige von generierten Alarmen gespeichert sind. In WO 2006000110 wird ein Verfahren zur Unterdrückung redundanter Alarme beschrieben, wobei mittels eines Filters aus zuvor generierten Alarmen solche identifiziert werden, die redundant sind, sowie solche, die noch nicht klassifiziert sind. Nur nichtredundante und noch nicht klassifizierte Alarme werden zur Anzeige gebracht. Außerdem sind Alarmmanagementwerkzeuge kommerziell erhältlich, mit denen z. B. Korrelationskoeffizienten zwischen Alarmen berechnet werden können, und die eine Basis für die Konfiguration von Alarmunterdrückungsregeln sein können. Allerdings werden dabei lediglich binäre Daten, wie Alarm ein oder aus benutzt und insgesamt noch nicht befriedigende Ergebnisse erzielt. Anlagenfahrer sehen mitunter Alarmsysteme als derart nutzlos oder störend an, dass sie es vorziehen diese zu ignorieren. WO 94/19912 A, JP 5 189 679 A und EP 0 856 826 A offenbaren weitere Überwachungssysteme mit Alarmanalyse.

Davon ausgehend liegt der Erfindung die Aufgabe zugrunde, Verfahren anzugeben, mit denen eine Optimierung von Alarmsystemen erreichbar ist. Außerdem soll eine zur Durchführung geeignete Einrichtung angegeben werden.

Diese Aufgabe wird gelöst durch die Verfahren mit den in den unabhängigen Ansprüchen angegebenen Merkmalen. Vorteilhafte Ausgestaltungen sowie eine Einrichtung zur Durchführung der Verfahren sind in weiteren Ansprüchen und in der Beschreibung angegeben.

Die den Verfahren bzw. Verfahrensvarianten gemeinsame erfindungsgemäße Maßnahme, nämlich historische Prozessmesswerte zur Optimierung eines Alarmsystems heranzuziehen, also auf eine Datenreduktion, wie beispielsweise Abbildung von analogen Prozessmesswerten auf binäre Ereignisse zu verzichten, ermöglicht es, sämtliche durch Prozessmesswerte zur Verfügung stehende Information für Analysezwecke zu nutzen. Da eine Beschränkung auf diskrete Ereignisse entfällt, können redundante Alarme mit größerer Genauigkeit identifiziert werden. Ein weiterer Vorteil besteht darin, dass Störungsursachen identifiziert und gemeldet werden können, die bisher noch nicht zu einem Alarm geführt haben. Somit wird es möglich, Anlagenfahrer früher zu alarmieren. Sie haben dadurch mehr Zeit für eine Reaktion und der Prozess lässt sich in vielen Fällen auch leichter stabilisieren. Für einen vorgeschlagenen Alarmgrenzwert kann berechnet werden, wie oft dieser Wert in der Vergangenheit zur Aktivierung eines Alarms geführt hätte. Eine sehr kleine Anzahl von Aktivierungen deutet darauf hin, dass der Grenzwert noch enger gesetzt werden kann, wohingegen eine große Anzahl gegen die Verwendung des Grenzwerts spricht.

Die zur Durchführung der Verfahren benötigten historischen Prozessmesswerte stehen im allgemeinen als Aufzeichnungen in Prozessdatenbanken oder Prozessinformationsmanagement-Systemen zur Verfügung.

Nachfolgend ist ein beispielhafter Anwendungsfall des erfindungsgemäßen Verfahrens gezeigt:
Einen Wärmetauscher kühlt einen Gehälter mit sehr großem Inhalt. Dabei werden der Durchfluss im Wärmetauscher und die Temperatur im Behälter ermittelt. Sind die Grenzwerte für den Durchfluss im Wärmetauscher zu weit gesetzt, so kann man bei einem sich langsam verstopfenden Wärmetauscher erst sehr spät die steigende Behältertemperatur erkennen.

So ist nunmehr die kausale Verknüpfung zwischen dem Durchfluss im Wärmetauscher und der Temperatur im Behälter erkennbar und die Alarmgrenzen für den Durchfluss können enger gesetzt werden, um so das sich anbahnende Temperaturproblem - als prädiktiven Alarm - zukünftig früher zu erkennen.

Die weitere Beschreibung der Erfindung und deren Vorteile sowie deren Ausgestaltungen erfolgt nachstehend anhand von Ausführungsbeispielen, die in Zeichnungsfiguren dargestellt sind.

Es zeigen:
- **Fig.** 1: ein Flussschema zu einem Verfahren zur Generierung von Alarmunterdrückungsregeln,
- **Fig.** 2: ein Flussschema zu einem Verfahren zur Identifizierung prädiktiver Alarme,
- **Fig.** 3: ein Flussschema zu einem Verfahren zur Beurteilung und gegebenenfalls Optimierung von vorgegebenen Alarmkonfigurationsparametern, und
- **Fig.** 4: eine Einrichtung zur Durchführung der vorgenannten Verfahren.

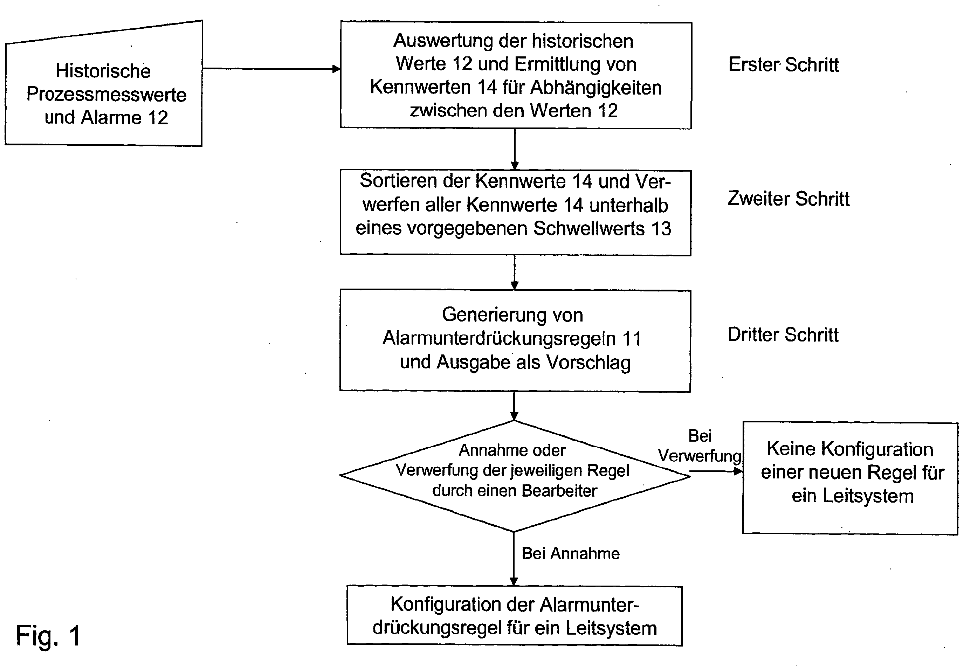

**Fig.** 1 zeigt den Ablauf eines automatisierten Verfahrens zur Generierung von Alarmunterdrückungsregeln, wobei nach dem Start in einem ersten Schritt eine Auswertung historischer Prozessmesswerte und Alarme 12 erfolgt, und Kennwerte 14 für Abhängigkeiten zwischen den Werten 12 ermittelt werden. Dazu sind Methoden wie Transfer Entropy Causality, Time Delay Causality und Korrelationsmethoden geeignet.

Im zweiten Schritt werden die Kennwerte 14 sortiert, und es werden Abhängigkeiten mit Kennwerten unterhalb eines vorgegebenen Schwellwerts 13 verworfen.

Im dritten Schritt werden Alarmunterdrückungsregeln 11 generiert und als Vorschläge zur Anzeige gebracht oder auf andere Weise ausgegeben. Solche Alarmunterdrückungsregeln 11 sagen z. B. aus, dass ein Alarm nicht gezeigt wird, wenn ein bestimmter anderer Alarm bereits aufgetreten ist.

Mit der Ausgabe von Alarmunterdrückungsregeln 11 als Vorschlag ist das automatisierte Verfahren beendet.

Ein Bearbeiter kann die Vorschläge annehmen oder verwerfen. Bei Annahme wird er die jeweilige Alarmunterdrückungsregel im entsprechenden Leitsystem konfigurieren, womit die Anzahl der dem Anlagenfahrer angezeigten Alarme reduziert werden kann.

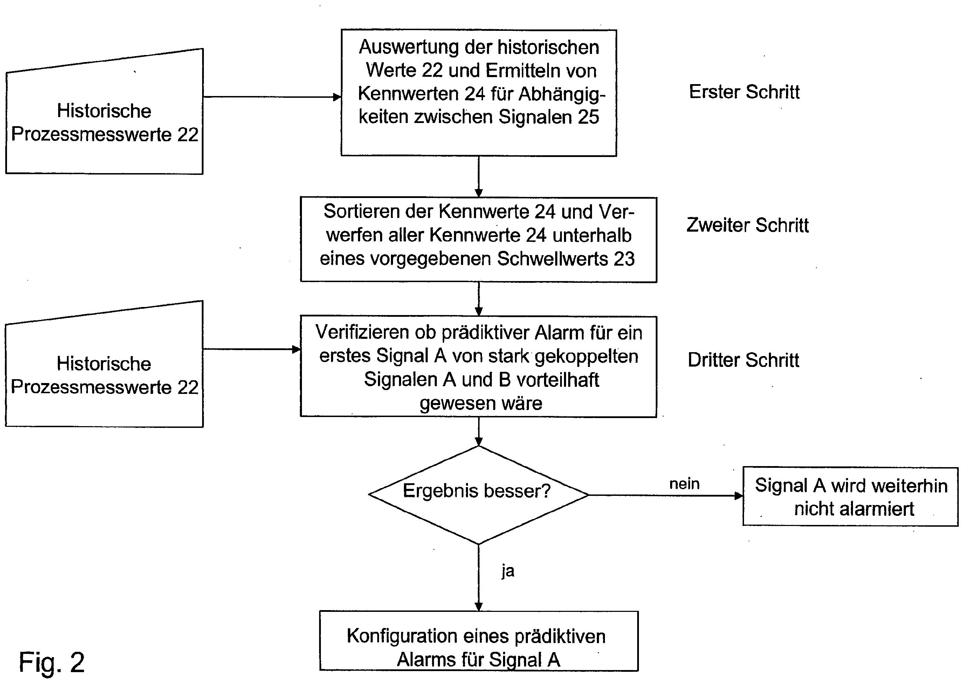

**Fig.** 2 zeigt den Ablauf eines automatisierten Verfahrens zur Ermittlung prädiktiver Alarme, wobei historische Prozesswerte 22 sowohl zur Auswertung als auch zur Verifikation herangezogen werden.

In einem ersten Schritt werden historische Prozesswerte 22, auch als Prozessmesswerte bezeichnet, mittels geeigneter Methoden, wie Korrelation, Transfer Entropy Causality oder Time Delay Causality ausgewertet, um Abhängigkeiten zwischen Prozessmesswerten 22 zu identifizieren und dafür Kennwerte 24 zu ermitteln. In einem zweiten Schritt werden die Kennwerte 24 sortiert und solche Kennwerte 24 eliminiert, die unterhalb eines vorgegebenen Schwellwerts 23 liegen. Somit verbleiben stark gekoppelte Prozessmesswerte A und B, wobei jeweils eine Störung im Prozessmesswert A Ursache für eine Folgestörung im Prozessmesswert B ist. Im dritten Schritt wird verifiziert, ob ein prädiktiver Alarm für Prozessmesswert A - im Fall der herangezogenen historischen Prozesswerte 22 - im Hinblick auf die weitere Entwicklung des damaligen Störungsverlaufs günstig gewesen wäre. Wenn die Überprüfung zeigt, dass eine frühere Alarmierung besser gewesen wäre, geht man davon aus, dass ein prädiktiver Alarm für Prozessmesswert A auch künftig vorteilhaft sein wird, und wird diesen im Leitsystem konfigurieren und als prädiktiven Alarm für Prozessmesswert A anzeigen.

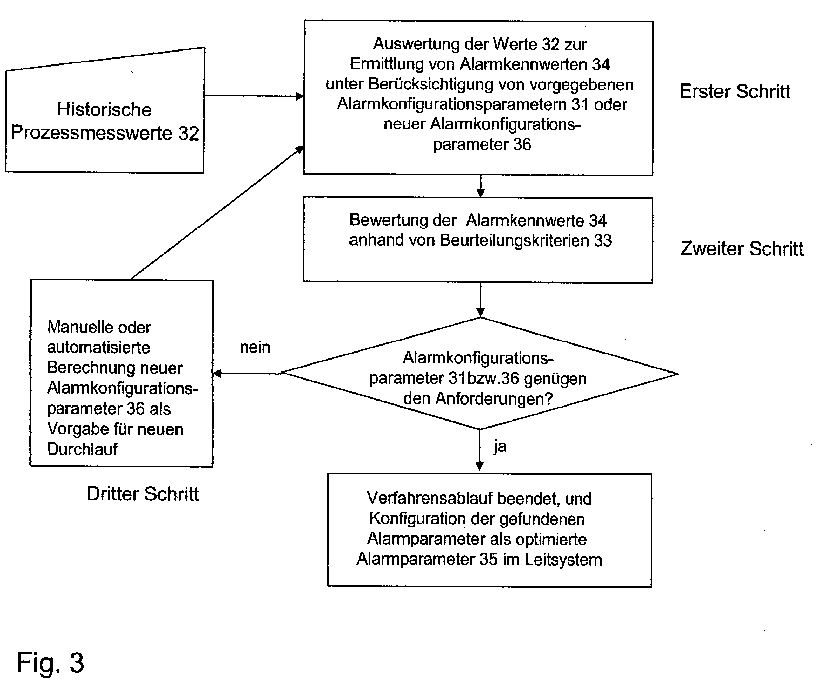

Beim Verfahren gemäß **Fig.** 3 wird die Eignung vorgegebener Alarmkonfigurationsparameter 31 überprüft. Dazu werden in einem ersten Schritt historische Prozesswerte 32 für einen ausgewählten Zeitraum der Vergangenheit unter Berücksichtigung der jeweiligen vorgegebenen Alarmkonfigurationsparameter 31 ausgewertet und Alarmkennwerte 34 berechnet. Solche Alarmkennwerte 34 können z. B. Alarmrate, Alarmdauer, Spitzenwerte oder Fehlalarmrate sein. In einem zweiten Schritt werden ermittelte Alarmkennwerte 34 anhand von Beurteilungskriterien 33 bewertet. Beurteilungskriterium 33 kann beispielsweise eine Zielfunktion, ein Gütekriterium oder eine Kostenfunktion sein. Ein Kriterium kann beispielsweise eine Alarmrate, Alarmschwellrate, Falschalarmrate oder auch eine Alarmnichterkennungsrate sein. Ein Gütekriterium kann z. B. so lauten: ein Alarm muss zu Zeitpunkten ta, tb tc aktiv sein. Je exakter der Alarm genau in den Zeiträumen ta1 bis ta2, tb1 bis tb2, tc1 bis tc2 aktiv ist, desto besser. Jede Minute nichtaktiv innerhalb dieser Zeiträume kostet z. B. 10 Punkte. Jede Minute aktiv außerhalb dieser Zeiträume kostet z. B. 5 Punkte. Der Alarm sollte im gewählten Zeitraum maximal 10 mal aktiviert werden. Ergibt sich z. B. bei Berücksichtigung eines solchen Gütekriteriums oder auch weiterer Kriterien, dass ein ermittelter Alarmkennwert 34 den Anforderungen genügt, so ist das Verfahren beendet, und der zugehörige Alarmparameter wird als optimaler Alarmparameter 35 im Leitsystem konfiguriert. Wenn der Alarmkennwert nicht den Anforderungen genügt, erfolgt in einem manuellen oder ebenfalls wie die vorherigen Schritte automatisiert durchgeführten dritten Schritt eine Änderung des Alarmparameters und Vorgabe dieses Parameters als neuer Alarmkonfigurationsparameter 36 für einen erneuten Durchlauf des Verfahrens.

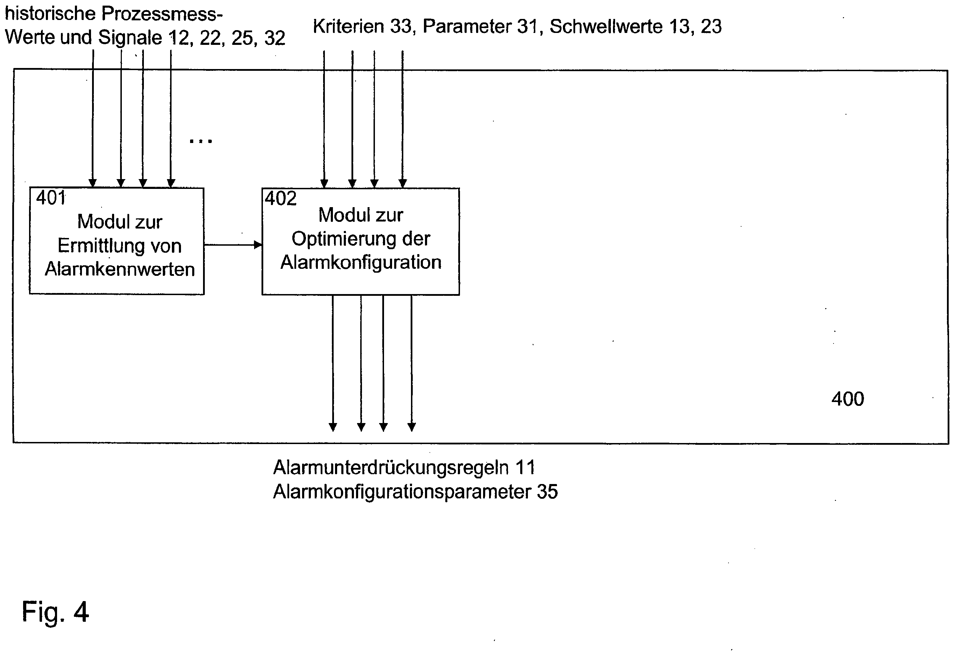

In **Fig.** 4 ist schematisiert eine Datenverarbeitungseinrichtung 400 dargestellt, die ein Modul 401 zur Ermittlung von Alarmkennwerten und ein Verarbeitungsmodul 402, insbesondere zur Optimierung der Alarmkonfiguration enthält. Die Datenverarbeitungseinrichtung 400 ist dafür eingerichtet, historische Prozessmesswerte und Alarme (12, 22, 32) auszuwerten, vorgegebene Kriterien (33), Kennwerte (14, 24, 34), Parameter (31, 36) und Schwellwerte (23) zu berücksichtigen und Ergebnisse, wie optimierte Alarmkonfigurationsparameter (35) oder Alarmunterdrückungsregeln (11) auszugeben.

## Patentansprüche

1. Verfahren zur automatisierten Optimierung von Alarmkonfigurationsparametern in einem Leitsystem einer Kraftwerksanlage oder Produktionsanlage unter Einsatz einer Datenverarbeitungseinrichtung (400), die Zugriff auf vorgegebene Alarmkonfigurationsparameter (31), auf historische Prozessmesswerte (32) und auf Prüf- und Beurteilungskriterien (33) für Alarmkennwerte hat, wobei die historischen Prozessmesswerte als Aufzeichnungen in einer Prozessdatenbank oder einem Prozessinformationsmanagement-System zur Verfügung stehen und wobei
a) in einem ersten Schritt eine Auswertung der historischen Prozessmesswerte (32) mittels geeigneter Berechnungsmethoden für einen ausgewählten Zeitraum der Vergangenheit und unter Berücksichtigung der vorgegebenen Alarmkonfigurationsparameter (31) erfolgt, und Alarmkennwerte (34) ermittelt werden,
b) in einem zweiten Schritt eine Bewertung der ermittelten Alarmkennwerte (34) unter Berücksichtigung der Prüf- und Beurteilungskriterien (33) für Alarmkennwerte erfolgt, und, falls die Alarmkennwerte (34) den Anforderungen gemäß den Prüf- und Beurteilungskriterien (33) für Alarmkennwerte entsprechen, die vorgegebenen Alarmkonfigurationsparameter (31) als optimierte Alarmkonfigurationsparameter (35) ausgegeben werden und der Verfahrensablauf beendet wird, andernfalls
c) in einem dritten Schritt unter Einsatz von Optimierungsalgorithmen neue Alarmkonfigurationsparameter (36) berechnet werden, und der Verfahrensablauf fortgesetzt wird durch erneute Durchführung der Verfahrensschritte, wobei die neuen Alarmkonfigurationsparameter (36) als vorgegebene Alarmkonfigurationsparameter (31) verwendet werden.

2. Verfahren zur automatisierten Generierung von Alarmunterdrückungsregeln (11) in einem Leitsystem einer Kraftwerksanlage oder Produktionsanlage unter Einsatz einer Datenverarbeitungseinrichtung (400), die Zugriff auf historische Prozessmesswerte und Alarme (12), sowie vorgegebene Schwellwerte (13) für Abhängigkeiten zwischen historischen Prozessmesswerten und Alarmen (12) hat, wobei die historischen Prozessmesswerte als Aufzeichnungen in einer Prozessdatenbank oder einem Prozessinformationsmanagement-System zur Verfügung stehen und wobei
a) in einem ersten Schritt eine Auswertung der historischen Prozessmesswerten und Alarmen (12) mittels geeigneter Berechnungsmethoden für einen ausgewählten Zeitraum der Vergangenheit erfolgt, kausal miteinander verbundene historische Prozessmesswerte und Alarme (12) identifiziert werden, und Kennwerte (14) für Abhängigkeiten zwischen solchen verbundenen historischen Prozessmesswerte und Alarme (12) ermittelt werden,
b) in einem zweiten Schritt die Kennwerte (14) sortiert, und unter Berücksichtigung der Schwellwerte (13) solche Kennwerte (14) verworfen werden, die unterhalb eines jeweils zugrundezulegenden Schwellwertes (13) liegen, und
c) in einem dritten Schritt auf der Grundlage der verbliebenen Kennwerte (14) Alarmunterdrückungsregeln (11) generiert und als Vorschlag ausgegeben werden.

3. Verfahren zur automatisierten Ermittlung eines prädiktiven Alarms in einem Leitsystem einer Kraftwerksanlage oder Produktionsanlage, unter Einsatz einer Datenverarbeitungseinrichtung (400), die Zugriff auf historische Prozessmesswerte (22), sowie vorgegebene Schwellwerte (23) für Abhängigkeiten zwischen Prozessmesswerten (22) hat, wobei die historischen Prozessmesswerte als Aufzeichnungen in einer Prozessdatenbank oder einem Prozessinformationsmanagement-System zur Verfügung stehen und wobei
a) in einem ersten Schritt eine Auswertung der historischen Prozessmesswerte (22) mittels geeigneter Berechnungsmethoden für einen ausgewählten Zeitraum der Vergangenheit erfolgt, um Abhängigkeiten zwischen Prozessmesswerten (22) und damit kausal miteinander verbundene Prozessmesswerte (22) zu identifizieren, und Kennwerte (24) für die Abhängigkeiten zu ermitteln,
b) in einem zweiten Schritt die Kennwerte (24) sortiert, und solche Kennwerte (24) eliminiert werden, die unterhalb eines jeweils zugrunde zulegenden vorgegebenen Schwellwertes (23) liegen, und
c) in einem dritten Schritt für solche Prozessmesswerte A und B, die gemäß den verbliebenen Kennwerten (24) jeweils stark verkoppelt sind, wobei eine dem Prozessmesswert A zugrundeliegende Störung die Ursache für eine dem Prozessmesswert B zugrundeliegende Störung ist, und wobei der Prozessmesswert A bisher noch keinen Alarm ausgelöst hat, verifiziert wird, ob ein prädiktiver Alarm für Prozessmesswert A, also eine frühere Warnung, vorteilhaft gewesen wäre, und wenn die Überprüfung zeigt, dass eine frühere Alarmierung besser gewesen wäre, ein prädiktiver Alarm für Prozessmesswert A im Leitsystem konfiguriert und als prädiktiver Alarm für Prozessmesswert A angezeigt wird.

4. Verfahren nach einem der Ansprüche 1 bis 3, **dadurch gekennzeichnet, dass** die genannten geeigneten Berechnungsmethoden ausgewählt sind aus Methoden wie Transfer Entropy Causality, Time Delay Causality oder Korrelationsmethoden.

5. Verfahren nach Anspruch 1, **dadurch gekennzeichnet, dass** die Prüf- und Beurteilungskriterien (33) für Alarmkennwerte ausgewählt sind aus Kriterien wie Alarmrate, Alarmschwallrate, Falschalarmrate und Alarmnichterkennungsrate und/oder eine Zielfunktion, eine Kostenfunktion oder ein anderes Gütekriterium enthalten.

6. Verfahren nach einem der Ansprüche 1, 4 oder 5, **dadurch gekennzeichnet, dass** die Alarmkennwerte ausgewählt sind aus Werten wie Alarmrate, Alarmdauer, Fehlalarmrate oder Spitzenwerten.

7. Einrichtung zur Durchführung eines der Verfahren in einem Leitsystem einer Kraftwerksanlage oder Produktionsanlage gemäß einem der vorstehenden Ansprüche, **dadurch gekennzeichnet, dass** eine Datenverarbeitungseinrichtung (400) vorhanden ist, wobei
a) die Datenverarbeitungseinrichtung (400) Zugriff auf historische Prozessmesswerte und Alarme (12, 22, 32), Prüf- und Beurteilungskriterien (33) für Alarmkennwerte, vorgegebenen Alarmkonfigurationsparameter (31), vorgegebene Schwellwerte (13) für Abhängigkeiten zwischen den historischen Prozessmesswerten und Alarmen, sowie Schwellwerte (23) für Abhängigkeiten zwischen Prozessmesswerten (22) hat, wobei die historischen Prozessmesswerte als Aufzeichnungen in einer Prozessdatenbank oder einem Prozessinformationsmanagement-System zur Verfügung stehen,
b) die Datenverarbeitungseinrichtung (400) Module (401, 402) enthält zur Auswertung historischer Prozessmesswerte und Alarme (12, 22, 32), und/oder zur Ermittlung und Bewertung von Alarmkennwerten (34), und/oder zur Berechnung neuer Alarmkonfigurationsparameter (36), und/oder zur Identifizierung kausal miteinander verbundener historischer Prozessmesswerte und Alarme, und/oder zur Ermittlung von Kennwerten (14) für Abhängigkeiten zwischen verbundenen historischen Prozessmesswerten und Alarmen, (12), und
c) die Datenverarbeitungseinrichtung (400) dafür eingerichtet ist, optimierte Alarmkonfigurationsparameter (35) und/oder Alarmunterdrückungsregeln (11) auszugeben.

## Claims

1. Method for automatically optimizing alarm configuration parameters in a control system of a power plant or production plant using a data processing device (400) which has access to predefined alarm configuration parameters (31), to historical process measured values (32) and to test and assessment criteria (33) for alarm characteristic values, in which the historical process measured values are available as recordings in a process database or a process information management system and in which
a) in a first step, the historical process measured values (32) are evaluated for a selected period of time in the past using suitable calculation methods and taking into account the predefined alarm configuration parameters (31), and alarm characteristic values (34) are determined,
b) in a second step, the alarm characteristic values (34) which have been determined are assessed taking into account the test and assessment criteria (33) for alarm characteristic values, and, if the alarm characteristic values (34) meet the requirements according to the test and assessment criteria (33) for alarm characteristic values, the predefined alarm configuration parameters (31) are output as optimized alarm configuration parameters (35) and the method sequence is ended, otherwise,
c) in a third step, new alarm configuration parameters (36) are calculated using optimization algorithms, and the method sequence is continued by carrying out the method steps again, the new alarm configuration parameters (36) being used as predefined alarm configuration parameters (31).

2. Method for automatically generating alarm suppression rules (11) in a control system of a power plant or production plant using a data processing device (400) which has access to historical process measured values and alarms (12) and to predefined threshold values (13) for dependences between historical process measured values and alarms (12), in which the historical process measured values are available as recordings in a process database or a process information management system and in which
a) in a first step, the historical process measured values and alarms (12) are evaluated for a selected period of time in the past using suitable calculation methods, historical process measured values and alarms (12) which are causally linked to one another are identified, and characteristic values (14) for dependences between such linked historical process measured values and alarms (12) are determined,
b) in a second step, the characteristic values (14) are sorted, and, taking into account the threshold values (13), those characteristic values (14) which are below a respective threshold value (13) to be taken as a basis are rejected, and
c) in a third step, alarm suppression rules (11) are generated on the basis of the remaining characteristic values (14) and are output as a proposal.

3. Method for automatically determining a predictive alarm in a control system of a power plant or production plant, using a data processing device (400) which has access to historical process measured values (22) and to predefined threshold values (23) for dependences between process measured values (22), in which the historical process measured values are available as recordings in a process database or a process information management system and in which
a) in a first step, the historical process measured values (22) are evaluated for a selected period of time in the past using suitable calculation methods, in order to identify dependences between process measured values (22) and thus process measured values (22) causally linked to one another, and to determine characteristic values (24) for the dependences,
b) in a second step, the characteristic values (24) are sorted, and those characteristic values (24) which are below a respective predefined threshold value (23) to be taken as a basis are eliminated, and
c) in a third step, for those process measured values A and B which are respectively strongly coupled according to the remaining characteristic values (24), a fault on which the process measured value A is based being the cause of a fault on which the process measured value B is based, and the process measured value A not yet having triggered an alarm, it is verified whether a predictive alarm would have been advantageous for process measured value A, that is to say an earlier warning, and if the check shows that an earlier alarm would have been better, a predictive alarm for process measured value A is configured in the control system and is indicated as predictive alarm for process measured value A.

4. Method according to Claims 1 to 3, **characterized in that** the suitable calculation methods mentioned are selected from methods such as transfer entropy causality, time delay causality or correlation methods.

5. Method according to Claim 1, **characterized in that** the test and assessment criteria (33) for alarm characteristic values are selected from criteria such as an alarm rate, an alarm threshold rate, a false alarm rate and an alarm non-detection rate and/or contain a target function, a cost function or another quality criterion.

6. Method according to one of Claims 1, 4 and 5, **characterized in that** the alarm characteristic values are selected from values such as an alarm rate, an alarm duration, a false alarm rate or peak values.

7. Device for carrying out one of the methods in a control system of a power plant or production plant according to one of the preceding claims, **characterized in that** a data processing device (400) is provided,
a) the data processing device (400) having access to historical process measured values and alarms (12, 22, 32), test and assessment criteria (33) for alarm characteristic values, predefined alarm configuration parameters (31), predefined threshold values (13) for dependences between the historical process measured values and alarms and threshold values (23) for dependences the historical process measured values (22), in which the historical process measured values are available as recordings in a process database or a process information management system,
b) the data processing device (400) containing modules (401, 402) for evaluating historical process measured values and alarms (12, 22, 32) and/or for determining and assessing alarm characteristic values (34) and/or for calculating new alarm configuration parameters (36) and/or for identifying historical process measured values and alarms which are causally linked to one another and/or for determining characteristic values (14) for dependences between linked historical process measured values and alarms (12), and
c) the data processing device (400) being set up to output optimized alarm configuration parameters (35) and/or alarm suppression rules (11).

## Revendications

1. Procédé pour l'optimisation automatisée de paramètres de configuration d'alarmes dans un système de gestion d'une centrale électrique ou d'une installation de production à l'aide d'un dispositif de traitement de données (400) qui a accès à des paramètres de configuration d'alarmes prédéterminés (31), à des valeurs historiques de mesure de processus (32) et à des critères de contrôle et d'évaluation (33) concernant des valeurs caractéristiques d'alarmes, dans lequel les valeurs historiques de mesure de processus sont disponibles sous la forme d'enregistrements dans une base de données de processus ou dans un système de gestion d'informations de processus, et dans lequel
a) lors d'une première étape, une évaluation des valeurs historiques de mesure de processus (32) est effectuée au moyen de méthodes de calcul appropriées pendant une période de temps sélectionnée dans le passé et en tenant compte des paramètres de configuration d'alarmes prédéterminés (31), et des valeurs caractéristiques d'alarmes (34) sont déterminées,
b) lors d'une deuxième étape, une évaluation des valeurs caractéristiques d'alarmes (34) déterminées est effectuée en tenant compte des critères de contrôle et d'évaluation (33) concernant des valeurs caractéristiques d'alarmes et, dans le cas où les valeurs caractéristiques d'alarmes (34) correspondent aux exigences définies par les critères de contrôle et d'évaluation (33) concernant des valeurs caractéristiques d'alarmes, les paramètres de configuration d'alarmes (31) prédéterminés sont délivrés en tant que paramètres de configuration d'alarmes (35) optimisés, et le déroulement du procédé est interrompu, et sinon
c) lors d'une troisième étape, de nouveaux paramètres de configuration d'alarmes (36) sont calculés à l'aide d'algorithmes d'optimisation et le déroulement du procédé se poursuit en exécutant à nouveau les étapes du procédé, dans lequel les nouveaux paramètres de configuration d'alarmes (36) sont utilisés en tant que paramètres de configuration d'alarmes (31) prédéterminés.

2. Procédé pour la génération automatisée de règles de suppression d'alarmes (11) dans un système de gestion d'une centrale électrique ou d'une installation de production à l'aide d'un dispositif de traitement de données (400) qui a accès à des valeurs historiques de mesure de processus et à des alarmes (12), ainsi qu'à des valeurs de seuil (13) prédéterminées concernant des dépendances entre des valeurs historiques de mesure de processus et des alarmes (12), dans lequel les valeurs historiques de mesure de processus sont disponibles sous la forme d'enregistrements dans une base de données de processus ou dans un système de gestion d'informations de processus et dans lequel
a) lors d'une première étape, une évaluation des valeurs historiques de mesure de processus et des alarmes (12) est effectuée au moyen de méthodes de calcul appropriées pendant une période de temps sélectionnée dans le passé, des valeurs historiques de mesure de processus et des alarmes (12) liées entre elles de manière causale sont identifiées, et des valeurs caractéristiques (14) concernant des dépendances entre lesdites valeurs historiques de mesure de processus et les alarmes (12) liées entre elles sont déterminées,
b) lors d'une deuxième étape, les valeurs caractéristiques (14) sont triées et, en tenant compte des valeurs de seuil (13), les valeurs caractéristiques (14) qui se situent en-dessous d'une valeur de seuil (13) respective devant être prise pour base sont rejetées, et
c) lors d'une troisième étape, sur la base des valeurs caractéristiques restantes (14), des règles de suppression d'alarmes (11) sont générées et sont délivrées en tant que proposition.

3. Procédé pour la détermination automatique d'une alarme prédictive dans un système de gestion d'une centrale électrique ou d'une installation de production à l'aide d'un dispositif de traitement de données (400) qui a accès à des valeurs historiques de mesure de processus (22) ainsi qu'à des valeurs de seuil prédéterminées (23) concernant des dépendances entre des valeurs de mesure de processus (22), dans lequel les valeurs historiques de mesure de processus sont disponibles sous la forme d'enregistrements dans une base de données de processus ou dans un système de gestion d'informations de processus, et dans lequel
a) lors d'une première étape, une évaluation des valeurs historiques de mesure de processus (22) est effectuée au moyen de méthodes de calcul appropriées pendant une période de temps sélectionnée dans le passé afin d'identifier des dépendances entre des valeurs de mesure de processus (22) et des valeurs de mesure de processus (22) liées entre elles de manière causale et de déterminer des valeurs caractéristiques (24) concernant les dépendances,
b) lors d'une deuxième étape, les valeurs caractéristiques (24) sont triées et les valeurs caractéristiques (24) qui se situent en-dessous d'une valeur de seuil prédéterminée (23) respective à utiliser en tant que base sont éliminées, et
c) lors d'une troisième étape, pour les valeurs de mesure de processus A et B respectives qui sont fortement couplées conformément aux valeurs caractéristiques (24) restantes, étant entendu qu'une perturbation sous-jacente à la valeur de mesure de processus A est la cause d'une perturbation sous-jacente à la valeur de mesure de processus B, et étant entendu que la valeur de mesure de processus A n'a pas encore déclenché d'alarme, il est vérifié si une alarme prédictive, c'est-à-dire une alarme plus précoce, aurait été avantageuse en ce qui concerne la valeur de mesure de processus A, et lorsque la vérification montre qu'une alarme plus précoce aurait été préférable, une alarme prédictive est configurée en ce qui concerne la valeur de mesure de processus A dans le système de gestion et est affichée en tant qu'alarme prédictive pour la valeur de mesure de processus A.

4. Procédé selon l'une des revendications 1 à 3, **caractérisé en ce que** lesdites méthodes de calcul appropriées sont sélectionnées parmi des méthodes telles que la causalité d'entropie de transfert, la causalité de retard temporel ou des méthodes de corrélation.

5. Procédé selon la revendication 1, **caractérisé en ce que** les critères de contrôle et d'évaluation (33) concernant des valeurs caractéristiques d'alarmes sont sélectionnés parmi des critères tels que le taux d'alarmes, le taux d'excès d'alarmes, le taux de fausses alarmes et le taux de non-détection d'alarmes et/ou incluent une fonction cible, une fonction de coût ou un autre critère de qualité.

6. Procédé selon l'une des revendications 1, 4 ou 5, **caractérisé en ce que** les valeurs caractéristiques d'alarmes sont sélectionnées parmi des valeurs telles que le taux d'alarmes, la durée d'alarme, le taux de fausses alarmes ou des valeurs crêtes.

7. Dispositif pour la mise en oeuvre de l'un des procédés dans un système de gestion d'une centrale électrique ou d'une installation de production selon l'une des revendications précédentes, **caractérisé en ce qu'**il est prévu des moyens de traitement de données (400), dans lequel
a) le dispositif de traitement de données (400) a accès à des valeurs historiques de mesure de processus et à des alarmes (12, 22, 32), à des critères de contrôle et d'évaluation (33) concernant des valeurs caractéristiques d'alarmes, à des paramètres de configuration d'alarmes (31) prédéterminés, à des valeurs de seuil (13) prédéterminées concernant des dépendances entre les valeurs historiques de mesure de processus et les alarmes, ainsi qu'à des valeurs de seuil (23) concernant des dépendances entre des valeurs de mesure de processus (22), dans lequel les valeurs historiques de mesure de processus sont disponibles sous la forme d'enregistrements dans une base de données de processus ou dans un système de gestion d'informations de processus,
b) le dispositif de traitement de données (400) comporte des modules (401, 402) destinés à évaluer des valeurs historiques de mesure de processus et des alarmes (12, 22, 32) et/ou à déterminer et évaluer des valeurs caractéristiques d'alarmes (34) et/ou à calculer de nouveaux paramètres de configuration d'alarmes (36) et/ou à déterminer des valeurs caractéristiques (14) concernant des dépendances entre des valeurs historiques de mesure de processus et des alarmes (12) liées entre elles, et
c) le dispositif de traitement de données (400) est conçu pour délivrer des paramètres de configuration d'alarmes (35) et/ou des règles de suppression d'alarmes (11) optimisés.
